(19) Europäisches Patentamt
European Patent Office
Office européen des brevets

(11) **EP 3 214 755 A1**

(12) **EUROPEAN PATENT APPLICATION**

(43) Date of publication:
06.09.2017 Bulletin 2017/36

(51) Int Cl.:
*H02P 27/06* (2006.01)　　　　*H02M 1/42* (2007.01)

(21) Application number: 17158690.2

(22) Date of filing: 01.03.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 02.03.2016　BR 102016004678

(71) Applicant: **Whirlpool S.A.**
**04578-000 São Paulo - SP (BR)**

(72) Inventors:
• **JESKE, Edson**
**89218-180 Joinville (BR)**
• **MAASS, Günter Johann**
**89218-060 Joinville (BR)**

(74) Representative: **Soldatini, Andrea et al**
**Società Italiana Brevetti S.p.A.**
**Corso dei Tintori, 25**
**50122 Firenze (IT)**

(54) **SYSTEM FOR CORRECTION OF HARMONIC CONTENT IN ELECTRIC POWER CIRCUIT, SYSTEM FOR CONTROL OF ELECTRIC MOTORS, AND REFRIGERATION COMPRESSOR**

(57)　The present invention relates to the fields of power electronics and electric motors, and describes a system for correcting harmonic content in power systems. The invention solves the space and weight problem, associated with the core of an inductor for correcting harmonic content, also providing performance advantages of electric motors, such as higher available voltage at maximum load and higher rotational speed at maximum load. The invention is particularly useful in refrigeration compressors.

Figure 3

## Description

Field of the Invention

The present invention relates to the fields of power electronics and electric motors. More specifically, the present invention describes a system for correction of harmonic content in an electric power circuit, a system for controlling electric motors and a refrigeration compressor.

Background of the invention

Currently, various types of electric motors, usually the alternating current motors, use a device called a frequency inverter to control the motor, such as speed control, starting, and other parameters.

However, inverters have a non-linear voltage and current function, that is, they do not obey a straight line. Non-linear elements act on its feeding supply by contaminating it with a large number of low-order harmonics, distorting the feeding and causing reduction in power quality and over-dimensioning of the distribution network.

Due to the effect of current and voltage distortions, there may be an increase in electrical losses in the installations and the overheating of its components (cables, transformers, capacitor bank, motors, etc.), as well as a reduction in the power factor. Considering these circumstances, a reactive element, such as an inductor, is added at the input of the network to provide a reduction in the harmonics content.

Power systems can be any type of electric motors, refrigerators, compressors and/or other devices that absorb and dissipate power. Specifically, in circuits that dissipate much power, high electric currents pass through said inductor. The dimensioning of this inductor in order to maintain its inductance characteristics, even for transient regimes, directly impacts the inductor core and, thus, the inductor size. Thus, the inductor occupies a larger space in a circuit, making it expensive, heavy and/or very bulky, often making economically unfeasible an equipment or resulting in higher energy consumption.

The present invention provides a solution to these problems. From the literature reviewed, it was found no documents anticipating or suggesting the teachings of the present invention, so that the solution proposed herein presents, in the eyes of the inventors, novelty and inventive activity in view of the state of the art.

Summary of the Invention

The present invention aims to solve the problems of the state of the art, from a system for correction of harmonic content of current in power systems which is characterized by comprising an inductor sized to operate with saturated core when in maximum load regime, allowing it to have smaller dimensions, weight, and cost in view of conventional inductors.

It is one of the objects of the present invention a system for correcting harmonic content of current, in an electric power circuit comprising an inductor (L) which saturates when the circuit operates under maximum load operation regime.

Another object of the present invention is a system for controlling electric motors, comprising a circuit for the correction of harmonic content of current, having an inductor (L) which saturates when the motor operates at maximum load.

It is also another object of the present invention a refrigeration compressor comprising a system for controlling electric motors, comprising a circuit for the correction of harmonic content of current, having an inductor (L) which saturates when the motor operates at maximum load.

These and other objects of the invention will be readily appreciated by those skilled in the art and by companies having interests in the field, and will be described in sufficient detail for their reproduction in the following description.

Brief Description of the Drawings

The following figures are presented in order to better define and clarify the contents of the present patent application:

Figure 1 illustrates the comparative chart of inductance and electric current flowing in the inductor, during the pull-down cycle of a refrigeration compressor.

Figure 2 illustrates a comparative chart of electric current in the conventional inductor and the inductor of an embodiment of the system of the invention, operating in the saturation region, when both operate in the saturation region.

Figure 3 illustrates an embodiment of the inductor (L) of the present invention, positioned upstream in a system.

Figure 4 illustrates a second embodiment of the inductor (L) of the present invention, positioned downstream in a system.

Figure 5 illustrates a concrete example, wherein the mathematical relation is applied $L = \frac{B * A_e * N}{I}$ in the inductor design, with the indication of the parameter Ae, that is, the cross-sectional area of the magnetic element.

Detailed description of the Invention

In various applications, connected to electric power systems, the electric motor presents a variation in its current of consumption, that is, said motor uses a current of operation and, at a certain moment, it needs more power, impacting in an increase of current. This increase is momentary and usually presents a short duration time.

The present invention provides a system for correction of harmonic content of current in power systems which is characterized by comprising an inductor, sized to operate with saturated core when in maximum load regime, allowing it to have smaller dimensions, weight, and cost in view of the conventional inductors.

It is one of the objects of the present invention a system for correcting harmonic content of current, in an electric power circuit comprising an inductor (L) which saturates when the circuit operates under maximum load operation regime.

In one embodiment, said system comprises:

a. a rectifying system;
b. at least one capacitive filter associated with at least one converter for controlling the motor; and
c. at least one inductor (L), whose core saturates when the circuit operates under maximum load operation regime.

In one embodiment, said converter is a frequency inverter. In one embodiment, said inductor (L) provides detectable decrease of the inductance, during the maximum load operation regime. In one embodiment, said system comprises: a rectifying system (31); a capacitive filter (32); a frequency inverter (33) configured to operate an electric motor (34); and an inductor (L).

Another object of the present invention is a system for controlling electric motors, comprising a circuit for the correction of harmonic content of current, having an inductor (L) which saturates when the motor operates at maximum load.

In one embodiment, said circuit comprises:

a. a rectifying system;
b. at least one capacitive filter associated with at least one converter for controlling the motor; and
c. at least one inductor (L), whose core saturates when the motor operates under maximum load operation regime.

In one embodiment, said converter is a frequency inverter. In one embodiment, said inductor (L) provides detectable decrease of the inductance, during the maximum load operation regime. In one embodiment, said circuit comprises: a rectifying system (31); a capacitive filter (32); a frequency inverter (33) configured to operate an electric motor (34); and an inductor (L).

It is also another object of the present invention a refrigeration compressor comprising a system for controlling electric motors, comprising a circuit for the correction of harmonic content of current, having an inductor (L) which saturates when the motor operates at maximum load.

In one embodiment, the compressor is of variable capacity. In one embodiment, the compressor has an inductor (L) which operates saturated during the pull-down cycle (10) of the compressor. In one embodiment, the compressor operates with rotation at maximum load higher than that obtained when a saturated inductor is not used.

The system of the invention is applicable to various electric power systems, such as electric motors - including refrigeration compressor motors.

Electric motors used in refrigeration compressors, for example, are subjected to two cycles: the pull-down cycle (10) and the regime cycle (11), or normal operation cycle. The pull-down cycle (10) consists in lowering the temperature of the refrigerator according to a desired temperature, which occurs at the time the refrigerator is first started or when the refrigerator is switched off for a long time. Therefore, the pull-down cycle (10) does not occur during the operation of the refrigerator. However, such cycle requires a high power and an intense electric current, which generally implies in the oversizing of the inductor for the correction of the harmonic content of current.

The following examples are presented for the sole purpose of facilitating the understanding of the inventive concept of the present invention, in some of its embodiments, and should not be interpreted as limiting the scope of the invention.

*Example 1 - System for correction of harmonic content of current in electric circuit of power in a refrigeration compressor.*

The present invention provides a system for the correction of harmonic content in power electrical circuits comprising an inductor (L) as a reactive component. The core of said inductor is provided with small dimensions, however complying with the requirements of maximum electric current, in the maximum load regime, from the converter to the control of the motor, that in this embodiment is a frequency inverter. In this embodiment, the maximum load regime is that of pull-down (10), in which the motor operation maximum temperature also occurs. In this embodiment, the core of the inductor is sized to operate in the saturation region during the pull-down cycle (10) of a compressor of variable capacity.

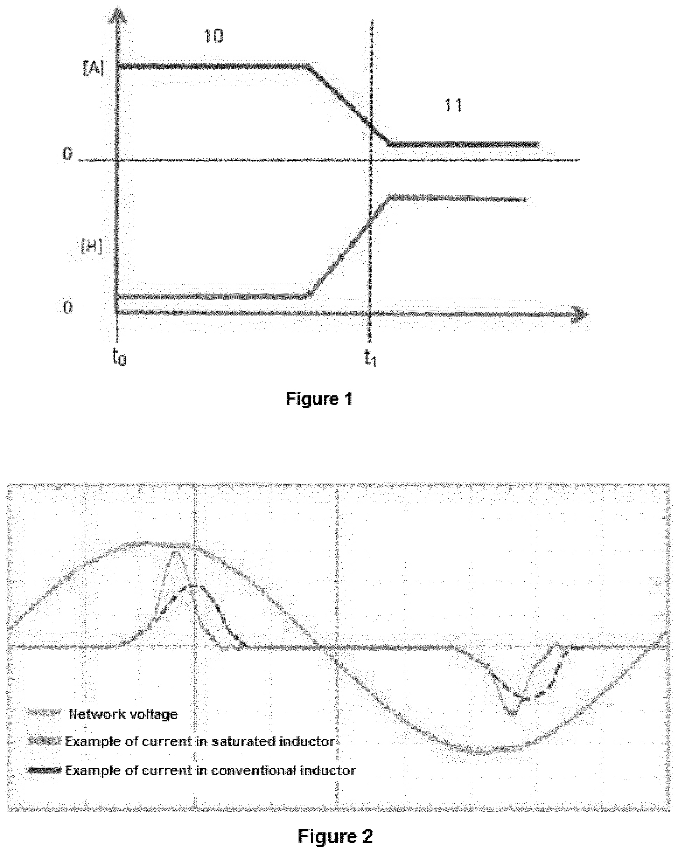

As can be seen in Figure 1, at the time the motor current is high, that is, during the pull-down cycle (10), the inductor operates with the core saturated, presenting low inductance. Thus, at the instant that the current of the compressor of variable capacity returns to the regime state (11), that is, under normal operating conditions, the inductor (L) operates in its normal state.

Having in mind that the core of the inductor (L), of said system, operates in the saturation region during the pull-down cycle (10), it does not have to be oversized. Thus, the system of the invention comprises an inductor (L) whose core operates saturated during a pull-down cycle (10), providing an inductor of reduced size, cost and weight.

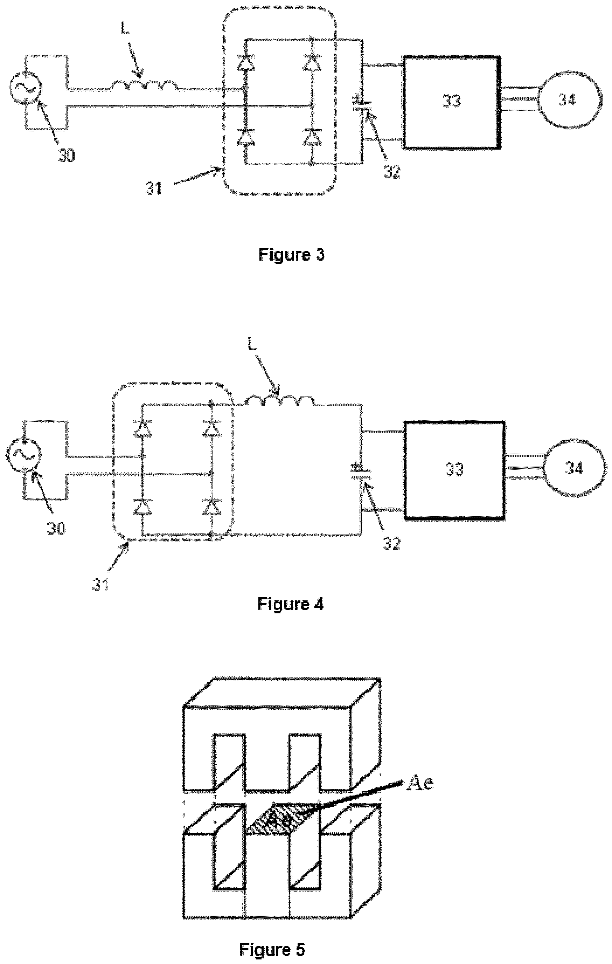

The sizing of the inductor (L) of the present invention is performed based on the equation $L = \frac{B*Ae*N}{I}$, in which, according to the example of Figure 5, L corresponds to the Henry inductance (H); B corresponds to the magnetic flux density at Weber per square meter (Wb/m$^2$); Ae corresponds to the cross-sectional area of the magnetic element in square meters (m$^2$); and I corresponds to the electric current flowing in the inductor.

The parameter B depends on the quantities related to the core material used in the inductor, such as magnetic permeability, wherein the conventional inductor must be built in such a way as to prevent the value of B from operating in the region of saturation of the core, since when this happens, the value of B begins to decrease, and consequently causes a reduction in the inductance value, in Henry [H]. To avoid the occurrence of this phenomenon, it is increased the parameter Ae, which causes the dimensions of the inductor to also increase.

The present invention also provides a system for controlling electric motors, which provides the reduction of the harmonic content, caused by non-linear elements. The system is composed of a circuit, or system, of rectification (31) from the signal emanated from a source (30) of alternating voltage. In one embodiment, the system also comprises a capacitive filter (32), a frequency inverter (33) and an inductor (L), that in this way electrically feeds the electric motor (34).

In one embodiment, the capacitive filter is associated with the frequency inverter (33) which, in turn, is configured to operate said electric motor (34), which is an integral part of a system of compressor of variable capacity.

The inductor (L) of the system is sized to operate in saturation region during a pull-down cycle (10) of the compressor, the sizing of the inductor (L) being as described above. Thus, during the pull-down cycle (10) the inductance of the inductor (L) is decreased by the fact that an increase in electric current occurs.

*Example 2 - System for controlling electric motor equipped with harmonic content reduction circuit, with inductor positioned upstream.*

In one embodiment, illustrated in Figure 3, the inductor (L) is inserted into the electric motor control circuit (34) with one of the terminals connected to the electric power source (30) and the other terminal connected to the rectifying system (31).

*Example 3 - System for controlling electric motor equipped with harmonic content reduction circuit, with inductor positioned downstream.*

In another embodiment, illustrated in Figure 4, the inductor (L) is inserted with one of the terminals connected to the frequency inverter (33) and the capacitive filter (32), and the other terminal connected to the frequency inverter (33). The forms of connection of the inductor (L) to the system for controlling electric motors (34) are numerous and not restricted to the two proposed embodiments.

*Example 4 - Compressor endowed with harmonic content reduction circuit.*

In one embodiment, the refrigeration compressor is of variable capacity and comprises an electric motor controlled by the system for the correction of harmonic content of the invention. In this embodiment, the control circuit has reduced size and weight, respecting the operating conditions of the compressor during the pull-down cycle (10) of, for example, a refrigerator, to which the compressor of variable capacity is installed.

Among other advantages deriving from the use of this inductor for a compressor of variable capacity, the increase of the capacity (rotation) of the compressor at maximum load deserves to be emphasized, because as the inductor is saturated, its inductance is reduced and the impact on the available voltage drop for the compressor becomes smaller. The invention provides detectable decrease of the inductance during the maximum load operation regime. The rotation at maximum load speed is higher than that obtained when a saturated inductor is not used.

A compressor equipped with the system for controlling harmonic content also provides an increase in the available voltage, due to the operation with the inductor saturated at the maximum load regime, this increase of up to 10% depending on the saturation and the value of the inductor.

In tests performed with a compressor of variable capacity for refrigerators, the beneficial increase in the available voltage, due to operation with the saturated inductor, was of 1.6%. This reflected in an increase of the same ratio in the motor rotation.

Those skilled in the art will appreciate the knowledge presented herein and may reproduce the invention in the embodiments presented and in other embodiments falling within the scope of the appended claims

**Claims**

1. System for correcting harmonic content of current, in an electric power circuit, **characterized by** the fact that it comprises an inductor (L) which saturates when the circuit operates under maximum load operation regime.

2. System, according to Claim 1, **characterized by** the fact that it comprises:

   a. a rectifying system;
   b. at least one capacitive filter associated with at least one converter for controlling the motor; and

c. at least one inductor (L), whose core saturates when the circuit operates under maximum load operation regime.

3. System, according to claim 2, **characterized by** the fact that said converter is a frequency inverter.

4. System, according to claim 2 or 3, **characterized by** the fact that said inductor (L) provides detectable decrease of the inductance during the maximum load operation regime.

5. System, according to any one of the preceding claims, **characterized by** the fact that it comprises:

    a. a rectifying system (31);
    b. a capacitive filter (32);
    c. a frequency inverter (33) configured to operate an electric motor (34); and
    d. an inductor (L).

6. System for controlling electric motors, **characterized by** the fact that it comprises a circuit, for the correction of harmonic content of current, having an inductor (L) which saturates when the motor operates at maximum load.

7. System, according to claim 6, **characterized by** the fact that said circuit comprises:

    a. a rectifying system;
    b. at least one capacitive filter associated with at least one converter for controlling the motor; and
    c. at least one inductor (L), whose core saturates when the motor operates under maximum load operation regime.

8. System, according to claim 7, **characterized by** the fact that said converter is a frequency inverter.

9. System, according to claim 7 or 8, **characterized by** the fact that said inductor (L) provides detectable decrease of the inductance during the maximum load operation regime.

10. System, according to any one of claims 6 to 9, **characterized by** the fact that it comprises:

    a. a rectifying system (31);
    b. a capacitive filter (32);
    c. a frequency inverter (33) configured to operate an electric motor (34); and
    d. an inductor (L).

11. Refrigerating compressor, **characterized by** the fact that it comprises the system for controlling electric motors, as defined in any one of claims 6 to 10.

12. Compressor, according to claim 11, **characterized by** the fact that it is a variable capacity compressor.

13. Compressor, according to claim 11 or 12, **characterized by** the fact that the inductor (L) operates saturated during the pull-down cycle (10) of the compressor.

14. Compressor, according to any one of claims 11 to 13, **characterized by** the fact that the rotation ate maximum load is greater than that obtained when a saturated inductor is not used.

15. Compressor, according to any one of claims 11 to 14, **characterized by** the fact that the electric motor has 10% higher available voltage, when compared to a compressor without the saturated inductor (L).

Figure 1

Network voltage

Example of current in saturated inductor

Example of current in conventional inductor

Figure 2

Figure 3

Figure 4

Figure 5

Europäisches
Patentamt

European
Patent Office

Office européen
des brevets

**EUROPEAN SEARCH REPORT**

Application Number

EP 17 15 8690

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 601 089 A1 (MATSUSHITA ELECTRIC IND CO LTD [JP]) 30 November 2005 (2005-11-30) * paragraph [0044] - paragraph [0048]; figure 8 * * paragraph [0064] * | 1-15 | INV. H02P27/06 H02M1/42 |
| X | EP 1 677 412 A1 (TOYO ELECTRIC MFG CO LTD [JP]) 5 July 2006 (2006-07-05) * paragraphs [0011], [0017]; figures 2,5 * | 1 | |
| X | US 5 416 687 A (BEASLEY DENNY D [US]) 16 May 1995 (1995-05-16) * column 3 - column 7; claim 2; figure 1 * | 1 | |

TECHNICAL FIELDS
SEARCHED       (IPC)

H02P
H02M

The present search report has been drawn up for all claims

| Place of search | Date of completion of the search | Examiner |
|---|---|---|
| Munich | 11 July 2017 | Kruip, Stephan |

EPO FORM 1503 03.82 (P04C01)

## ANNEX TO THE EUROPEAN SEARCH REPORT
## ON EUROPEAN PATENT APPLICATION NO.

EP 17 15 8690

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2017

| Patent document cited in search report | | | Publication date | Patent family member(s) | | | Publication date |
|---|---|---|---|---|---|---|---|
| EP 1601089 | A1 | | 30-11-2005 | CN | 1702951 | A | 30-11-2005 |
| | | | | EP | 1601089 | A1 | 30-11-2005 |
| | | | | ES | 2348626 | T3 | 09-12-2010 |
| EP 1677412 | A1 | | 05-07-2006 | CN | 1890871 | A | 03-01-2007 |
| | | | | EP | 1677412 | A1 | 05-07-2006 |
| | | | | JP | 4587655 | B2 | 24-11-2010 |
| | | | | JP | 2005110474 | A | 21-04-2005 |
| | | | | US | 2007040386 | A1 | 22-02-2007 |
| | | | | WO | 2005034334 | A1 | 14-04-2005 |
| US 5416687 | A | | 16-05-1995 | AU | 4647793 | A | 24-01-1994 |
| | | | | CA | 2138673 | A1 | 06-01-1994 |
| | | | | US | 5416687 | A | 16-05-1995 |
| | | | | WO | 9400908 | A1 | 06-01-1994 |

EPO FORM P0459

For more details about this annex : see Official Journal of the European Patent Office, No. 12/82